# EUROPEAN PATENT SPECIFICATION

(11) **EP 3 081 754 B1**
(45) Date of publication and mention of the grant of the patent: **02.06.2021**
(21) Application number: 16163892.9
(22) Date of filing: 05.04.2016
(51) Int. Cl.: F01D 5/18

(54) **TURBINE AIRFOIL**
TURBINENSCHAUFEL
AUBE DE TURBINE

(30) Priority: 13.04.2015 US 201514684908
(43) Date of publication of application: 19.10.2016
(73) Proprietor: General Electric Company, Schenectady, NY 12345 (US)
(72) Inventor: ZHANG, Xiuzhang James, Greenville, SC South Carolina 29615 (US); DUTTA, Sandip, Greenville, SC South Carolina 29615 (US); ITZEL, Gary Michael, Greenville, SC South Carolina 29615 (US)
(74) Representative: BRP Renaud & Partner mbB Rechtsanwälte Patentanwälte Steuerberater

(56) References cited:
- EP-A1- 2 743 454
- EP-A2- 2 615 244
- GB-A- 619 634
- US-A- 5 193 980
- US-A- 5 624 231
- US-A- 6 036 440
- US-A1- 2005 123 401
- US-A1- 2012 207 614
- US-B1- 7 866 948

## Description

The subject matter disclosed herein relates to gas turbine engines and, more particularly, to a turbine airfoil for such engines.

In turbine engines, such as gas turbine engines or steam turbine engines, fluids at relatively high temperatures contact blades that are configured to extract mechanical energy from the fluids to thereby facilitate a production of power and/or electricity. While this process may be highly efficient for a given period, over an extended time, the high temperature fluids tend to cause damage that can degrade performance and increase operating costs.

Accordingly, it is often necessary and advisable to cool the blades in order to at least prevent or delay premature failures. This can be accomplished by delivering relatively cool compressed air to the blades to be cooled. In many traditional gas turbines, in particular, this compressed air enters the bottom of each of the blades to be cooled and flows through one or more round machined passages in the radial direction to cool the blade through a combination of convection and conduction.

In these traditional gas turbines, as the temperature of the fluids increases, it becomes necessary to increase the amount of cooling flow through the blades. This increased flow can be accomplished by an increase in a size of the cooling holes. However, as the cooling holes increase in size, the wall thickness of each hole to the external surface of the blade decreases and eventually challenging manufacturability and structural integrity of the blade.

US 5624231 A discloses a film-cooled turbine blade having circular and non-circular cooling channels. EP 2615244 A2 discloses a film-cooled turbine blade having a plurality of trench segments on the exterior surface for supplying cooling media to the exterior surface. US 766948 B1 discloses a film cooled turbine blade having non-circular cooling channels wherein exhaust holes are extending between the non-circular cooling channels and the suction and pressure walls of the blade.

According to the present invention there is provided a turbine airfoil according to claim 1.

Further embodiments of the invention are disclosed in the dependent claims.

These and other advantages and features will become more apparent from the following description taken in conjunction with the drawings.

The foregoing and other features, and advantages of the invention are apparent from the following detailed description taken in conjunction with the accompanying drawings in which:
FIG. 1 is a schematic illustration of a gas turbine engine;
FIG. 2 is a perspective view of a turbine airfoil; and
FIG. 3 is a cross-sectional view of the turbine airfoil taken along line A-A of FIG. 2.

The detailed description explains embodiments of the invention, together with advantages and features, by way of example with reference to the drawings.

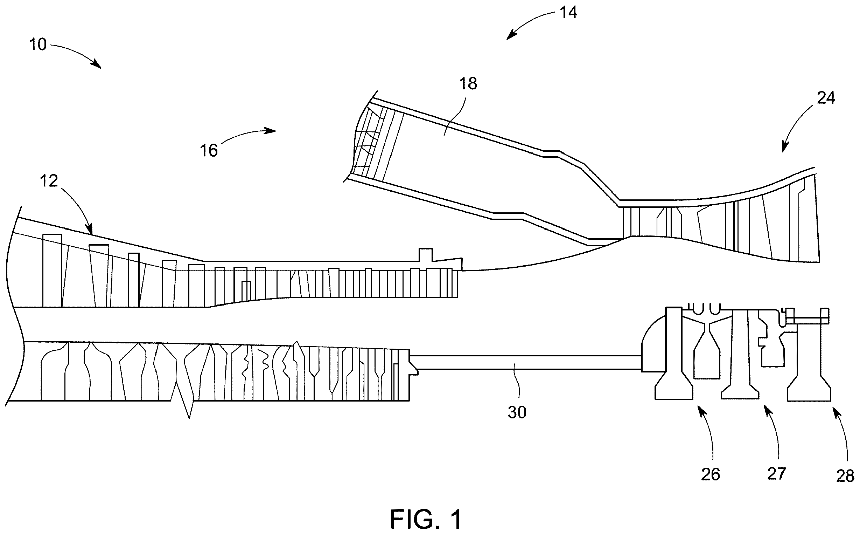

Referring to FIG. 1, a turbine system, such as a gas turbine engine 10, constructed in accordance with an exemplary embodiment of the present invention is schematically illustrated. The gas turbine engine 10 includes a compressor section 12 and a plurality of combustor assemblies arranged in a can annular array, one of which is indicated at 14. The combustor assembly is configured to receive fuel from a fuel supply (not illustrated) and a compressed air from the compressor section 12. The fuel and compressed air are passed into a combustor chamber 18 and ignited to form a high temperature, high pressure combustion product or air stream that is used to drive a turbine 24. The turbine 24 includes a plurality of stages 26-28 that are operationally connected to the compressor 12 through a compressor/turbine shaft 30 (also referred to as a rotor).

In operation, air flows into the compressor 12 and is compressed into a high pressure gas. The high pressure gas is supplied to the combustor assembly 14 and mixed with fuel, for example natural gas, fuel oil, process gas and/or synthetic gas (syngas), in the combustor chamber 18. The fuel/air or combustible mixture ignites to form a high pressure, high temperature combustion gas stream, which is channeled to the turbine 24 and converted from thermal energy to mechanical, rotational energy.

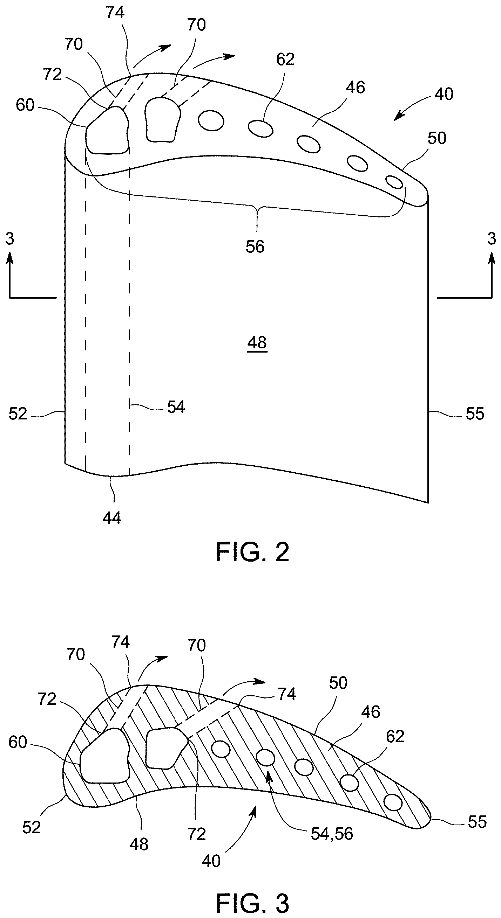

Referring now to FIGS. 2 and 3, with continued reference to FIG. 1, a perspective view of a portion of a turbine airfoil 40 (also referred to as a "turbine bucket," "turbine blade airfoil" or the like) is illustrated. It is to be appreciated that the turbine airfoil 40 may be located in any stage of the turbine 24. In one embodiment, the turbine airfoil 40 is located within the illustrated first stage (i.e., stage 26) of the turbine 24. Although only three stages are illustrated, it is to be appreciated that more or less stages may be present. In any event, the turbine airfoil 40 extends radially from a root portion 44 to a tip portion 46. The turbine airfoil 40 includes a pressure side wall 48 and a suction side wall 50, where the geometry of the turbine airfoil 40 is configured to provide rotational force for the turbine 24 as fluid flows over the turbine airfoil 40. As depicted, the suction side wall 50 is convex-shaped and the pressure side wall 48 is concave-shaped. Also included are a leading edge 52 and a trailing edge 55, which are joined by the pressure side wall 48 and the suction side wall 50. Although the following discussion primarily focuses on gas turbines, the concepts discussed are not limited to gas turbine engines and may be applied to any rotary machine employing turbine blades.

The pressure side wall 48 and the suction side wall 50 are spaced apart in the circumferential direction over the entire radial span of the turbine airfoil 40 to define at least one internal flow chamber or channel for channeling cooling air through the turbine airfoil 40 for the cooling thereof. In the illustrated embodiment, a plurality of cooling channels 54 is illustrated, with each of the channels spaced along a length of the turbine airfoil 40. Cooling air is typically bled from the compressor section 12 in any conventional manner. The cooling air is discharged through at least one, but typically a plurality of outlet holes 56 located at the tip portion 46 of the turbine airfoil 40.

The plurality of cooling channels 54 may be machined by way of electro-chemical machining processes (ECM), for example. In one embodiment, the plurality of cooling channels 54 is formed from shaped tube electrolyzed machining (STEM). Regardless of the precise machining process, the cooling air is made to flow in a radial direction along a length of the cooling channels 54 by fluid pressure and/or by centrifugal force. As the cooling air flows, heat transfer occurs between the turbine airfoil 40 and the cooling air. In particular, the cooling air removes heat from the turbine airfoil 40 and, in addition, tends to cause conductive heat transfer within solid portions of the turbine airfoil. The conductive heat transfer may be facilitated by the turbine airfoil 40 being formed of metallic material, such as metal and/or a metal alloy that is able to withstand relatively high temperature conditions. The overall heat transfer decreases a temperature of the turbine airfoil 40 from what it would otherwise be as a result of contact between the turbine airfoil 40 with, for example, relatively high temperature fluids flowing through the gas turbine engine 10.

Although it is contemplated that all of the plurality of cooling channels 54 are formed of a similar cross-sectional geometry, in the illustrated embodiment at least one of the cooling channels 54 may be defined as having a substantially non-circular cross-sectional shape and is referred to herein as a non-circular cooling channel 60, while at least one of the plurality of cooling channels 54 has a cross-sectional geometry that is circular and is referred to herein as a circular cooling channel 62. The non-circular shape of the non-circular cooling channel allows for an increased perimeter and larger cross-sectional area of the cooling channel and leads to a greater degree of heat transfer without a thickness of the wall having to be sacrificed beyond a wall thickness that is required to maintain manufacturability and structural integrity. As illustrated, a plurality of cooling holes may have the aforementioned non-circular geometry and similarly a plurality of cooling holes may have the circular geometry.

Where the cooling hole(s) is non-circular, the cooling channel may have various alternative shapes including, but not limited to, elliptical or otherwise elongated shapes. The cooling channel may be rounded or angled, regular or irregular. The cooling channel may be symmetric about a predefined axis or non-symmetric about any predefined axis. The cooling channel may be defined with elongate sidewalls that have profiles mimicking local profiles of the pressure and suction side walls, such that the wall channel wall is elongated with a thickness that is equal to or greater than a wall thickness required for the maintenance of manufacturability and structural integrity. Similarly, the cooling channel may be longer in an axial direction of the turbine airfoil 40 than a circumferential direction thereof and/or may have an aspect ratio that is less than or greater than 1, non-inclusively.

The substantial non-circularity of the non-circular cooling channel 60 may be localized, may extend along a partial radial length of the non-circular cooling channel 60 or may extend along an entire radial length of the non-circular cooling channel 60. In this way, the increased heat transfer facilitated by the substantial non-circularity of the non-circular cooling channel 60 may be provided to only a portion of the length of the turbine airfoil or to a portion along the entire length of the turbine airfoil 40.

The relative positioning of the non-circular cooling channel(s) 60 and the circular cooling channel(s) 62 is illustrated. In particular, in one embodiment, all of the non-circular cooling channels 60 are located between the circular cooling channels 62 and the leading edge 52, such that the non-circular cooling channels 60 are closer in proximity to the leading edge 52 relative to the proximity of the circular cooling channels 62 to the leading edge 52.

To reduce the pressure within the non-circular cooling channels 60, thereby lowering the supply pressure needed to effectively route the cooling air through the channels, at least one exhaust hole 70 is included and defined by the turbine airfoil 40. In particular, each non-circular cooling channel 60 includes at least one exhaust hole, but possibly a plurality of exhaust holes, to form an airway through the turbine airfoil 40 between the non-circular cooling channel 60 and an exterior region of the turbine airfoil 40, such as a hot gas path, on the suction side wall 50 side of the turbine airfoil 40. The exhaust hole 70 is configured to bleed the cooling air out of the non-circular cooling channel 60 into a hot gas path to reduce the pressure within the cooling channel. The exhaust hole 70 includes an exhaust hole inlet 72 at the location of intersection with the non-circular cooling channel 60 and an exhaust hole outlet 74 at the suction side wall 50. Although it is contemplated that the exhaust hole 72 is located radially at any location along the turbine airfoil 40, typically all or a portion of the exhaust hole 70 is located closer to the tip portion 46 than to the root portion 44.

Positioning of the non-circular cooling channel 60 near the leading edge 52 of the turbine airfoil 40 and inclusion of the associated exhaust hole(s) is beneficial based on the higher pressure present near the leading edge 52. This higher pressure near the leading edge 52 poses a challenge to maintain the required cooling flow through channels close to leading edge 52. For a given supply pressure at the root of the bucket, reducing cavity pressure (i.e., sink pressure) in this region is desirable which ensures overall cooling of the airfoil near leading edge.

The exhaust hole 70 may be formed of any suitable geometry. For example, ellipses, circles, squares or rectangles may be employed, but the preceding list is not exhaustive. As such, it is to be understood that the illustrated and above-noted geometries are not limiting of the shapes that may be employed. Regardless of the precise shape of the holes, it is contemplated that the cross-sectional shape of the holes may remain constant throughout the length of the holes or may vary as a function of length. Additionally, as shown, the exhaust hole 70 may extend through the turbine airfoil 40 at an angle to enhance the tendency of the cooling air to escape into the hot gas path through the holes. Angling of the exhaust hole 70 refers to aligning the exhaust hole in such a way that cooling flow coming out of the hole mixes smoothly with the hot gas flowing over the suction surface of the airfoil. Typically, this includes angling the exhaust hole 70 in an orientation that disposes the exhaust hole inlet 72 closer in proximity to the leading edge 52 when compared to the proximity of the exhaust hole outlet 74. In other words, the exhaust hole 70 angles toward the trailing edge 55, from inlet to outlet. However, alternative angling is contemplated. For example, the exhaust hole 70 may angle toward the leading edge 52, from inlet to outlet. Additionally, the exhaust hole 70 may angle radially. For example, the exhaust hole 70 may angle from root portion 44 to tip portion 46, or vice versa, from inlet to outlet.

Advantageously, the combination of non-circular cooling channels and exhaust holes associated with the cooling channels avoids the need to increase the supply pressure to ensure sufficient routing of the cooling air through the turbine airfoil. Additionally, the embodiments described herein avoid the need to redesign the overall turbine airfoil geometry, thus maintaining the aerodynamic performance of the turbine airfoil within the application, such as a gas turbine engine.

While the invention has been described in detail in connection with only a limited number of embodiments, it should be readily understood that the invention is not limited to such disclosed embodiments. The invention is not to be seen as limited by the foregoing description, but is only limited by the scope of the appended claims.

## Claims

1. A turbine airfoil comprising:
a leading edge (52);
a trailing edge (55);
a root (44);
a tip (46);
a pressure side wall (48) extending between the leading edge and the trailing edge and between the root and the tip;
a suction side wall (50) extending between the leading edge and the trailing edge and between the root and the tip;
a plurality of cooling channels (60) having a non-circular cross-sectional shape and is referred to as a non-circular cooling channels defined by the turbine airfoil and extending radially between the root and the tip;
a plurality of cooling channels (62) having a cross-sectional geometry that is circular and is referred to as a circular cooling channels defined by the turbine airfoil and extending radially between the root and the tip, wherein all of the plurality of non-circular cooling channels (60) are located between the leading edge (52) and the plurality of circular cooling channels (62); and
a plurality of exhaust holes (70), each of the plurality of exhaust holes extending between one of the plurality of non-circular cooling channels (60) and the suction side wall (50) to fluidly couple the plurality of non-circular cooling channels and an exterior region of the turbine airfoil, each of the plurality of exhaust holes radially located between the root and the tip.

2. A turbine airfoil (40) as claimed in claim 1, wherein each of the plurality of non-circular cooling channels routes cooling air to an outlet hole (74) formed in the tip (46).

3. The turbine airfoil of claim 1 or claim 2, wherein one or more of the non-circular cooling channels comprise(s) a non-circular geometry along an entire length thereof.

4. The turbine airfoil of any preceding claim, wherein one or more of the exhaust holes comprise(s) an exhaust hole inlet and an exhaust hole outlet, the exhaust hole angled to dispose the exhaust hole outlet closer in proximity to the tip relative to the exhaust hole inlet proximity to the tip.

5. The turbine airfoil of any one of claims 1 to 3, wherein one or more of the exhaust holes comprise(s) an exhaust hole inlet and an exhaust hole outlet, the exhaust hole angled to dispose the exhaust hole inlet closer in proximity to the tip relative to the exhaust hole outlet proximity to the tip.

6. The turbine airfoil of any one of claims 1 to 3, wherein one or more of the exhaust holes is/are located closer in proximity to the tip than to the root.

7. The turbine airfoil of any preceding claim, wherein each of the plurality of non-circular cooling channels comprising at least one exhaust hole fluidly coupled thereto.

8. The turbine airfoil of any preceding claim, wherein one or more of the non-circular cooling channel(s) is formed from shaped tube electrolyzed machining.

9. A gas turbine engine comprising:
a compressor section (12);
a combustor section (14) and
a turbine section (24) comprising:
a turbine airfoil (40) according to any one of the preceding claims.

10. The gas turbine engine of the preceding claim, wherein the turbine airfoil (40) is disposed in a first stage of a turbine section (24) of the gas turbine engine.

## Patentansprüche

1. Turbinenschaufel, umfassend:
eine Vorderkante (52);
eine Hinterkante (55);
einen Fuß (44);
eine Spitze (46);
eine Druckseitenwand (48), die sich zwischen der Vorderkante und der Hinterkante und zwischen dem Fuß und der Spitze erstreckt;
eine Ansaugseitenwand (50), die sich zwischen der Vorderkante und der Hinterkante und zwischen dem Fuß und der Spitze erstreckt;
eine Vielzahl von Kühlkanälen (60), die eine nicht kreisförmige Querschnittsform aufweisen und als nicht kreisförmige Kühlkanäle bezeichnet werden, durch die Turbinenschaufel definiert sind und sich radial zwischen dem Fuß und der Spitze erstrecken;
eine Vielzahl von Kühlkanälen (62), die eine Querschnittsgeometrie aufweisen, die kreisförmig ist, und als kreisförmige Kühlkanäle bezeichnet werden, durch das Turbinenschaufelblatt definiert sind und sich radial zwischen dem Fuß und der Spitze erstrecken, wobei sich alle der Vielzahl von nicht kreisförmigen Kühlkanälen (60) zwischen der Vorderkante (52) und der Vielzahl von kreisförmigen Kühlkanälen (62) befinden; und
eine Vielzahl von Auslasslöchern (70), wobei sich jedes der Vielzahl von Auslasslöchern zwischen einem der Vielzahl von nicht kreisförmigen Kühlkanälen (60) und der Ansaugseitenwand (50) erstreckt, um die Vielzahl von nicht kreisförmigen Kühlkanälen und einen Außenbereich der Turbinenschaufel fluidtechnisch zu koppeln, wobei sich jedes der Vielzahl von Auslasslöchern radial zwischen dem Fuß und der Spitze befindet.

2. Turbinenschaufel (40) nach Anspruch 1, wobei jeder der Vielzahl von nicht kreisförmigen Kühlkanälen Kühlluft zu einem Auslassloch (74) leitet, das in der Spitze (46) ausgebildet ist.

3. Turbinenschaufel nach Anspruch 1 oder Anspruch 2, wobei einer oder mehrere der nicht kreisförmigen Kühlkanäle eine nicht kreisförmige Geometrie entlang einer gesamten Länge davon umfasst/umfassen.

4. Turbinenschaufel nach einem der vorstehenden Ansprüche, wobei eines oder mehrere der Auslasslöcher einen Auslasslocheinlass und einen Auslasslochauslass umfasst/umfassen, wobei das Auslassloch abgewinkelt ist, um den Auslasslochauslass im Verhältnis zu der Nähe des Auslasslocheinlasses zur Spitze näher an der Spitze anzuordnen.

5. Turbinenschaufelblatt nach einem der Ansprüche 1 bis 3, wobei eines oder mehrere der Auslasslöcher einen Auslasslocheinlass und einen Auslasslochauslass umfasst/umfassen, wobei das Auslassloch abgewinkelt ist, um den Auslasslocheinlass im Verhältnis zu der Nähe des Auslasslochauslasses zur Spitze näher an der Spitze anzuordnen.

6. Turbinenschaufel nach einem der Ansprüche 1 bis 3, wobei eines oder mehrere der Auslasslöcher näher an der Spitze als am Fuß angeordnet ist/sind.

7. Turbinenschaufel nach einem der vorstehenden Ansprüche, wobei jeder der Vielzahl von nicht kreisförmigen Kühlkanälen mindestens eine Auslassöffnung umfasst, die fluidtechnisch damit gekoppelt ist.

8. Turbinenschaufel nach einem der vorstehenden Ansprüche, wobei einer oder mehrere der nicht kreisförmigen Kühlkanäle durch elektrolysierte Formrohrbearbeitung gebildet ist/sind.

9. Gasturbinentriebwerk, umfassend:
einen Verdichterabschnitt (12);
einen Brennkammerabschnitt (14) und
einen Turbinenabschnitt (24), umfassend:
eine Turbinenschaufel (40) nach einem der vorstehenden Ansprüche.

10. Gasturbinentriebwerk nach dem vorstehenden Anspruch, wobei die Turbinenschaufel (40) in einer ersten Stufe eines Turbinenabschnitts (24) des Gasturbinentriebwerks angeordnet ist.

## Revendications

1. Profil de turbine comprenant :
un bord d'attaque (52) ;
un bord de fuite (55) ;
une racine (44) ;
une pointe (46) ;
une paroi de côté pression (48) s'étendant entre le bord d'attaque et le bord de fuite et entre la racine et la pointe ;
une paroi de côté aspiration (50) s'étendant entre le bord d'attaque et le bord de fuite et entre la racine et la pointe ;
une pluralité de canaux de refroidissement (60) ayant une forme en section transversale non circulaire et qui est référée en tant que canaux de refroidissement non circulaires définis par le profil de turbine et s'étendant radialement entre la racine et la pointe ;
une pluralité de canaux de refroidissement (62) ayant une géométrie en section transversale qui est circulaire et qui est référée en tant que canaux de refroidissement circulaires définis par le profil de turbine et s'étendant radialement entre la racine et la pointe, dans lequel la totalité de la pluralité de canaux de refroidissement non circulaires (60) est située entre le bord d'attaque (52) et la pluralité de canaux de refroidissement circulaires (62) ; et
une pluralité d'orifices d'échappement (70), chacun de la pluralité d'orifices d'échappement s'étendant entre l'un de la pluralité de canaux de refroidissement non circulaires (60) et la paroi de côté aspiration (50) pour coupler de manière fluidique la pluralité de canaux de refroidissement non circulaires et une région extérieure du profil de turbine, chacun de la pluralité d'orifices d'échappement situé radialement entre la racine et la pointe.

2. Profil de turbine (40) selon la revendication 1, dans lequel chacun de la pluralité de canaux de refroidissement non circulaires achemine de l'air de refroidissement vers un orifice de sortie (74) formé dans la pointe (46).

3. Profil de turbine selon la revendication 1 ou la revendication 2, dans lequel un ou plusieurs des canaux de refroidissement non circulaires comprend/comprennent une géométrie non circulaire le long de toute une longueur de celui-ci/ceux-ci.

4. Profil de turbine selon une quelconque revendication précédente, dans lequel un ou plusieurs des orifices d'échappement comprend/comprennent une entrée d'orifice d'échappement et une sortie d'orifice d'échappement, l'orifice d'échappement orienté pour disposer la sortie d'orifice d'échappement plus près en proximité de la pointe par rapport à la proximité de l'entrée d'orifice d'échappement à la pointe.

5. Profil de turbine selon l'une quelconque des revendications 1 à 3, dans lequel un ou plusieurs des orifices d'échappement comprend/comprennent une entrée d'orifice d'échappement et une sortie d'orifice d'échappement, l'orifice d'échappement orienté pour disposer l'entrée d'orifice d'échappement plus près en proximité de la pointe par rapport à la proximité de la sortie d'orifice d'échappement à la pointe.

6. Profil de turbine selon l'une quelconque des revendications 1 à 3, dans lequel un ou plusieurs des orifices d'échappement est/sont situé(s) plus près en proximité de la pointe que de la racine.

7. Profil de turbine selon une quelconque revendication précédente, dans lequel chacun de la pluralité de canaux de refroidissement non circulaires comprenant au moins un orifice d'échappement couplé de manière fluidique à celui-ci.

8. Profil de turbine selon une quelconque revendication précédente, dans lequel un ou plusieurs du/des canal/canaux de refroidissement est formé à partir d'usinage électrolysé de tube façonné.

9. Moteur de turbine à gaz comprenant :
une section de compresseur (12) ;
une section de chambre de combustion (14) et
une section de turbine (24) comprenant :
un profil de turbine (40) selon l'une quelconque des revendications précédentes.

10. Moteur de turbine à gaz selon la revendication précédente, dans lequel le profil de turbine (40) est disposé dans un premier étage d'une section de turbine (24) du moteur de turbine à gaz.
